# EUROPÄISCHE PATENTSCHRIFT

(11) **EP 4 601 902 B1**
(45) Veröffentlichungstag und Bekanntmachung des Hinweises auf die Patenterteilung: **29.07.2026**
(21) Anmeldenummer: 23772174.1
(22) Anmeldetag: 14.09.2023
(51) Int. Cl.: B60K 15/035, F02M 25/08, G01M 3/32

(54) **VERFAHREN ZUR ÜBERPRÜFUNG DER FUNKTIONSFÄHIGKEIT EINES STEUERBAREN ABSPERRVENTILS IN EINER TANKENTLÜFTUNGSANLAGE**
METHOD FOR CHECKING THE OPERABILITY OF A CONTROLLABLE SHUT-OFF VALVE IN A TANK VENTILATION SYSTEM
PROCÉDÉ DE VÉRIFICATION DU BON FONCTIONNEMENT D'UNE SOUPAPE D'ARRÊT POUVANT ÊTRE COMMANDÉE DANS UNE INSTALLATION DE VENTILATION DE RÉSERVOIR

(30) Priorität: 12.10.2022 DE 102022210767
(43) Veröffentlichungstag der Anmeldung: 20.08.2025
(73) Patentinhaber: Schaeffler Technologies AG & Co. KG, 91074 Herzogenaurach (DE)
(72) Erfinder: PICHLER, Thomas, 80687 München (DE)
(74) Vertreter: Schaeffler Technologies
(86) Internationale Anmeldenummer: PCT/EP2023/075212
(87) Internationale Veröffentlichungsnummer: WO 2024/078811

(56) Entgegenhaltungen:
- DE-A1- 102010 031 216
- US-B2- 9 683 523

## Beschreibung

Die Erfindung betrifft ein Verfahren zur Überprüfung der Funktionsfähigkeit eines steuerbaren Absperrventils in einer Tankentlüftungsanlage sowie ein Computerprogrammprodukt und eine Steuervorrichtung zur Ausführung dieses Verfahrens.

Gemäß gesetzlichen Vorschriften gilt es sicherzustellen, dass die in einem Kraftstofftank entstehenden Kraftstoffdämpfe nicht unkontrolliert in die Umgebung gelangen. Fahrzeuge mit Verbrennungsmotor werden daher üblicherweise mit einer Tankentlüftungsanlage ausgestattet. Kernelement der Tankentlüftungsanlage ist ein Kraftstoffdämpfespeicher, dem die im Kraftstofftank entstehenden Kraftstoffdämpfe zugeführt werden. Die Dämpfe werden von einem im Kraftstoffdämpfespeicher enthaltenen Adsorptionsmittel (üblicherweise Aktivkohle) adsorbiert und dadurch gespeichert. Um eine Sättigung des Adsorptionsmittels zu vermeiden, muss der Kraftstoffdämpfespeicher von Zeit zu Zeit regeneriert werden. Dazu wird der Kraftstoffdämpfespeicher mit Frischluft gespült, wobei die gespeicherten Kraftstoffdämpfe kontrolliert der motorischen Verbrennung zugeführt werden.

In rein verbrennungsmotorisch angetriebenen Fahrzeugen werden die Kraftstoffdämpfe aus dem Kraftstofftank dem Kraftstoffdämpfespeicher kontinuierlich zugeführt. Dies ist möglich, da der Verbrennungsmotor als einzige Antriebsquelle sehr häufig in Betrieb ist und daher die Regeneration des Kraftstoffdämpfespeicher kein Problem darstellt. Bei hybriden Antriebskonzepten, also bei Fahrzeugen mit Elektromotor und Verbrennungsmotor als Antriebsquellen, werden immer längere Wegstrecken ohne jegliche Aktivierung des Verbrennungsmotors zurückgelegt, wodurch die Regenerationsmöglichkeiten des Kraftstoffdämpfespeichers immer seltener werden. Aus diesem Grund werden inzwischen Drucktanklösungen eingesetzt, welche durch ein steuerbares Absperrventil von dem Kraftstoffdämpfespeicher getrennt sind. In diesen Drucktanks werden die darin ausgasenden Kohlenwasserstoffdämpfe unter Druck solange zurückgehalten bis ein Entweichen der Dämpfe in Richtung des Kraftstoffdämpfespeicher durch kontrolliertes Öffnen des Absperrventils ermöglicht wird.

Gesetzliche Vorschriften erfordern die Überprüfung der Funktionsfähigkeit der Tankentlüftungsanlage bzw. deren Komponenten. Die Funktionsfähigkeit des Absperrventils hat dabei eine sehr hohe Relevanz, denn es muss sichergestellt sein, dass der Kraftstofftank vor dem Öffnen des Tankdeckels drucklos ist, um ein unkontrolliertes Austreten von Kohlenwasserstoffen in die Umgebung zu verhindern.

Dokument US 9 683 523 B2 offenbart dazu ein Tankentlüftungssystem, welches ein Tank-Absperrventil für einen Kraftstofftank, das in fluider Kommunikation mit dem Kraftstofftank und einem Kraftstoffdämpfespeicher steht, und ein Belüftungsventil für den Kraftstoffdämpfespeicher, das in fluider Kommunikation mit dem Kraftstoffdämpfespeicher und der Umgebungsatmosphäre steht, aufweist, wobei jedes dieser Ventile eine offene und eine geschlossene Position einnehmen kann. Ein Diagnosetest wird durchgeführt, durch das Wechseln der Positionen des Tank-Absperrventils und des Belüftungsventils, das Detektieren eines Wechsels in einer ersten Druckmessung in dem Kraftstofftank und das Detektieren eines Wechsels in einer zweiten Druckmessung in dem Karbonkanister.

Weiterhin wird in Dokument DE 10 2010 031 216 A1 ein Verfahren offenbart, zur Prüfung der Funktionsfähigkeit eines Tankabsperrventils einer durch Ventile gesteuerten Kraftstoff-Tankanlage, wobei mittels einer Druckquelle ein Über- oder Unterdruck in die Kraftstoff-Tankanlage eingebracht wird. Dabei wird durch definiertes Ansteuern des Tankabsperrventils und gleichzeitiges Einbringen eines Über- oder Unterdrucks in die Kraftstoff-Tankanlage mittels der Druckquelle, aufgrund einer das Einbringen des Drucks charakterisierenden Größe auf die Funktionsfähigkeit des Tankabsperrventils geschlossen.

Es ist die Aufgabe der vorliegenden Erfindung, ein Verfahren, ein Computerprogrammprodukt und eine Steuervorrichtung bereitzustellen, mittels denen die Funktionsfähigkeit eines Absperrventils einer Tankentlüftungsanlage besonders zuverlässig überprüft werden kann.

Diese Aufgabe wird durch die Gegenstände der unabhängigen Ansprüche gelöst. Vorteilhafte Ausgestaltungen der Erfindung sind in den abhängigen Ansprüchen beschrieben.

Es wird ein Verfahren offenbart, das die Überprüfung der Funktionsfähigkeit eines steuerbaren Absperrventils in einer Tankentlüftungsanlage betrifft. Zur Tankentlüftungsanlage gehört ein Tankbereich, welcher einen Kraftstofftank aufweist, ein Speicherbereich, welcher einen Kraftstoffdämpfespeicher aufweist, eine Entgasungsleitung, welche den Kraftstoffdämpfespeicher und den Kraftstofftank verbindet, das steuerbare Absperrventil, welches in der Entgasungsleitung angeordnet ist und welches in einem geschlossenen Zustand einen Druckausgleich zwischen dem Tankbereich und dem Speicherbereich unterbindet und welches in einem geöffneten Zustand einen Druckausgleich zwischen dem Tankbereich und dem Speicherbereich erlaubt. Zur Tankentlüftungsanlage gehört ferner eine Druckänderungseinrichtung zum Ändern des Drucks im Speicherbereich sowie eine Druckerfassungseinrichtung zur Erfassung des Drucks im Speicherbereich und zur Ausgabe von Ausgabewerten, welche den erfassten Druck repräsentieren.

Die Druckerfassungseinrichtung weist eine Speicherdruckerfassungseinrichtung zur Erfassung des Drucks im Speicherbereich und eine Tankdruckerfassungseinrichtung zur Erfassung des Drucks im Tankbereich auf. Anders ausgedrückt hat die Druckerfassungseinrichtung eine erste Druckerfassungseinrichtung, die zur Erfassung eines Drucks im Speicherbereich (in der vorliegenden Offenbarung auch "Speicherdruck" genannt) ausgebildet ist und sie hat eine zweite Druckerfassungseinrichtung, die zur Erfassung eines Drucks im Tankbereich (in der vorliegenden Offenbarung auch "Tankdruck" genannt) ausgebildet ist. Der Druck im Tankbereich ist insbesondere der Druck im Kraftstofftank, bei flüssigen Kraftstoffen kann es sich zweckmäßig um den Druck des Gasvolumens oberhalb des Flüssigkeitsspiegels im Kraftstofftank handeln.

Gemäß einem Schritt des Verfahrens die Druckerfassungseinrichtung aktiviert.

Bei einer Ausgestaltung des Verfahrens wird in einem weiteren Verfahrensschritt ein Steuern des Absperrventils im Sinne des geschlossenen Zustands ausgeführt.: Unter dem Steuern des Absperrventils im Sinne des geschlossenen Zustands wird insbesondere verstanden, dass ein Steuersignal an das Absperrventil gesendet wird, mittels welchem ein Schließvorgang des Absperrventils initiiert wird. Unter "Steuern im Sinne des geschlossenen Zustands" wird in der vorliegenden Offenbarung auch verstanden, wenn - beispielsweise nach dem Fahrzeugstart - ein geschlossener Sollzustand des Absperrventils beibehalten wird und keine Steuerung im Sinne eines geöffneten Zustands des Absperrventils erfolgt. Bei einer weiteren Ausgestaltung des Verfahrens wird alternativ oder nachfolgend auf das Steuern des Absperrventils im Sinne des geschlossenen Zustands in einem Verfahrensschritt detektiert, ob ein geschlossener Sollzustand des Absperrventils vorliegt. Das Verfahren wird vorzugsweise abgebrochen oder neu gestartet, wenn kein geschlossener Sollzustand vorliegt. Unter einem geschlossenen Sollzustand des Absperrventils wird insbesondere ein Zustand verstanden, bei dem das Absperrventil nicht im Sinne eines geöffneten Zustands angesteuert ist. Beispielsweise bei einem stromlos geschlossenen Ventil ist der geschlossene Sollzustand der stromlose Zustand. Das Steuern des Absperrventils im Sinne des geschlossenen Sollzustands und/oder die Detektion, ob ein geschlossener Sollzustand des Absperrventils vorliegt, erfolgt insbesondere vor oder nach dem Aktivieren der Druckerfassungseinrichtung.

Gemäß einem weiteren, insbesondere dem Steuern des Absperrventils im Sinne des geschlossenen Zustands oder der Detektion eines geschlossenen Sollzustands nachfolgenden, Verfahrensschritt wird die Druckänderungseinrichtung im Sinne einer Änderung des Drucks im Speicherbereich betrieben.

Gemäß einem weiteren, insbesondere dem Betreiben der Druckänderungseinrichtung nachfolgenden, Verfahrensschritt wird der Druckverlauf im Speicherbereich mittels Erfassung von Ausgangssignalen der Speicherdruckerfassungseinrichtung über einen ersten Zeitraum ermittelt und der ermittelte Druckverlauf wird dahingehend ausgewertet, ob eine durch den Betrieb der Druckänderungseinrichtung verursachte erste Druckänderung im Speicherraum ein erstes Plausibilitätskriterium erfüllt. Bei einer Weiterbildung des Verfahrens ist das erste Plausibilitätskriterium erfüllt, wenn innerhalb des ersten Zeitraums der Betrag des Gradienten des Druckverlaufs im Speicherbereich während des ersten Zeitraums oberhalb eines vorgegebenen Schwellwerts bleibt. Bei einer anderen Weiterbildung ist zur Erfüllung des ersten Plausibilitätskriteriums, insbesondere zusätzlich, erforderlich, dass der Druckverlauf während des ersten Zeitraums monoton steigend ist, d.h. mit anderen Worten der Druckgradient hat ein positives Vorzeichen. In zweckmäßiger Ausführung des Verfahrens wird das Verfahren abgebrochen oder neu gestartet, wenn das erste Plausibilitätskriterium nicht erfüllt ist. Auf diese Weise kann mit Vorteil eine hohe Zuverlässigkeit des Verfahrens sichergestellt sein.

Wenn das erste Plausibilitätskriterium erfüllt ist werden, gemäß einem weiteren Verfahrensschritt, die Druckverläufe im Speicherbereich und im Tankbereich mittels Erfassen von Ausgangssignalen der Speicherdruckerfassungseinrichtung bzw. der Tankdruckerfassungseinrichtung über einen zweiten Zeitraum ermittelt. Der zweite Zeitraum kann gleichzeitig mit dem ersten Zeitraum, innerhalb des ersten Zeitraums oder nachfolgend auf den ersten Zeitraum beginnen. Bei einer Ausführungsform des Verfahrens ist der Beginn des zweiten Zeitraums durch den Start eines Zeitzählers definiert.

Gemäß einem weiteren Verfahrensschritt, insbesondere zugleich oder nachfolgend auf die Ermittlung der Druckverläufe über den zweiten Zeitraum, wird eine Korrelation zwischen den über den zweiten Zeitraum ermittelten Druckverläufen im Speicherbereich und im Tankbereich ausgewertet.

Bei einer zweckmäßigen Ausgestaltung erfolgt die Ermittlung der Druckverläufe über den zweiten Zeitraum und/oder die Auswertung der Korrelation nur, falls das erste Plausibilitätskriterium erfüllt ist. Bei dieser Ausführungsform beginnt der zweite Zeitraum zweckmäßigerweise nachfolgend, z.B. direkt anschließend an den ersten Zeitraum.

Bei einem weiteren Verfahrensschritt wird ein Schließ-Fehler des Absperrventils in Abhängigkeit von der Korrelation zwischen den über den zweiten Zeitraum ermittelten Druckverläufen im Speicherbereich und im Tankbereich erkannt. Unter einem Schließ-Fehler des Absperrventils wird im vorliegenden Zusammenhang insbesondere ein Fehler des Absperrventils verstanden, bei dem das Senden des Steuersignal, mittels welchem der Schließvorgang des Absperrventils initiiert wird, keinen vollständig geschlossenen Zustand des Absperrventils herbeiführt - d.h. insbesondere nicht zu einer vollständigen Unterbindung des Druckausgleich zwischen dem Tankbereich und dem Speicherbereich führt.

Es wird überprüft, ob sich das Absperrventil ordnungsgemäß in den geschlossenen Zustand versetzen lässt. Im Gutfall, also wenn sich das Absperrventil ordnungsgemäß in den geschlossenen Zustand bewegen lässt, sind der Speicherbereich und der Tankbereich pneumatisch getrennt. Dadurch reduziert sich das wirksame pneumatische Volumen, auf welche die Druckänderungseinrichtung wirkt, auf das Volumen des Speicherbereichs. Im Schlechtfall, also wenn das Absperrventil im geöffneten Zustand klemmt und Tankbereich und Speicherbereich pneumatisch verbunden sind, setzt sich das wirksame pneumatische Volumen aus dem Volumen des Tankbereichs und dem Volumen des Speicherbereichs zusammen und ist daher erheblich größer als das pneumatisch wirksame Volumen im Gutfall. Zudem werden im Gutfall aufgrund der pneumatischen Trennung des Speicherbereichs vom Tankbereich Druckschwankungen nicht zwischen Tankbereich und Speicherbereich übertragen. Solche Druckschwankungen im Tankbereich können beispielsweise durch Schwappen des flüssigen Kraftstoffs im Kraftstofftank - z.B. aufgrund von Bewegungen des Fahrzeugs - oder durch Kohlenwasserstoffe, die aus dem flüssigen Kraftstoff ausgasen verursacht werden. Im Schlechtfall können Druckschwankungen im Tankbereich durch den Speicherbereich beeinflusst sein und/oder umgekehrt, beispielsweise können Druckschwankungen im Tankbereich durch die pneumatische Verbindung zum Kraftstoffdämpfespeicher gedämpft sein.

Im Gutfall ist daher zu erwarten, dass der Druckverlauf im Speicherbereich weniger stark mit dem Druckverlauf im Tankbereich korreliert als im Schlechtfall. Diese unterschiedlichen Ausprägungen der Korrelation im Gut- und Schlechtfall erlauben eine besonders zuverlässige Diagnose von Schließ-Fehlern des Absperrventils. Insbesondere ist die Gefahr von Fehldiagnosen aufgrund von Druckänderungen im Tankbereich besonders gering. Insbesondere besteht bei Durchführung des Verfahrens gemäß der vorliegenden Offenbarung mit Vorteil nur ein sehr geringes Risiko, dass ein Schließ-Fehler aufgrund einer hohen Druckdynamik im Tankbereich nicht erkannt wird.

In einer Ausgestaltung des Verfahrens wird ein Schließ-Fehler des Absperrventils erkannt, falls während des zweiten Zeitraums die Gradienten der Druckverläufe des Drucks im Tankbereich und des Drucks im Speicherbereich das gleiche Vorzeichen haben und der maximale Druckgradient des Drucks im Tankbereich innerhalb des zweiten Zeitraums einen in Abhängigkeit vom maximalen Druckgradienten des Drucks im Speicherbereich vorgegebenen Grenzwert überschreitet, oder die Differenz der Druckgradienten des Drucks im Tankbereich und des Drucks im Speicherbereich innerhalb des zweiten Zeitraums - d.h. insbesondere zu jedem Zeitpunkt innerhalb des zweiten Zeitraums - innerhalb eines vorgegebenen Toleranzbereichs bleibt. Andernfalls - d.h. zum Beispiel wenn der maximale Druckgradient des Drucks im Tankbereich den in Abhängigkeit vom maximalen Druckgradienten des Drucks im Speicherbereich vorgegebenen Grenzwert innerhalb des zweiten Zeitraums nicht überschreitet -wird insbesondere kein Schließ-Fehler erkannt und es wird von einem ordnungsgemäß geschlossenen Absperrventil ausgegangen.

Bei einer Ausgestaltung weist der Tankbereich einen Füllstandsensor auf. In diesem Fall kann das Verfahren einen zusätzlichen Schritt aufweisen, bei dem ein Signal des Füllstandsensors erfasst und eine Dauer des zweiten Zeitraums und/oder der Schwellwert für das erste Plausibilitätskriterium in Abhängigkeit von dem erfassten Signal des Füllstandsensors vorgegeben wird. Mit Vorteil kann auf diese Weise die Messzeit für die Druckverläufe und ein für die Zuverlässigkeit des Verfahrens zweckmäßiger Mindestdruckgradient an eine vom Füllstand des Kraftstofftanks abhängige Dynamik der Druckschwankungen im Kraftstofftank angepasst werden. Beispielsweise können die Trägheit des System und der Phasenverzug im System vom Tankfüllstand abhängen.

Bei einer anderen Ausgestaltung hat das Verfahren einen zusätzlichen Verfahrensschritt, bei dem der Druckverlauf im Speicherbereich mittels Erfassung von Ausgangssignalen der Speicherdruckerfassungseinrichtung über einen dritten Zeitraum ermittelt wird und der ermittelte Druckverlauf dahingehend ausgewertet wird, ob ein drittes Plausibilitätskriterium erfüllt ist. Dabei wird das dritte Plausibilitätskriterium insbesondere dann erfüllt bewertet, wenn der über den dritten Zeitraum ermittelte Druckverlauf im Speicherbereich entweder monoton steigend oder monoton fallend ist. Eine Änderung des Vorzeichens der Steigung kann beispielsweise durch Änderung der Betriebsparameter der Druckänderungsvorrichtung hervorgerufen werden. Wenn der Druckverlauf nicht monoton steigend oder fallend ist kann die Gefahr einer Verfälschung Korrelations-Auswertung bestehen, beispielsweise durch Änderungen bei der Phasenverschiebungen der Druckverläufe oder aufgrund der Trägheit des Systems.

Bei einigen Varianten dieser Ausgestaltung überlappt der dritte Zeitraum mit dem ersten und dem zweiten Zeitraum. Zum Beispiel ist der dritte Zeitraum gleich dem zweiten Zeitraum, oder der dritte Zeitraum ist ein Teilbereich des zweiten Zeitraums. Beispielsweise kann der Beginn des dritten Zeitraums ebenfalls durch den Start des Zeitzählers definiert sein. Bei einer weiteren Variante dieser Ausgestaltung erfolgt die Auswertung des Zusammenhangs zwischen den über den zweiten Zeitraum erfassten Druckverläufe im Speicherbereich und im Tankbereich nur, wenn das dritte Plausibilitätskriterium erfüllt ist.

Mit Vorteil ist bei dieser Ausgestaltung des Verfahrens das Risiko von Fehldiagnosen durch Schaltvorgänge von Ventilen in der Tankentlüftungsanlage besonders gering.

Bei einer weiteren Ausgestaltung des Verfahrens wird während des ersten Zeitraums ein Fluidmassestrom durch den Speicherbereich ermittelt. Der Fluidmassestrom durch den Speicherbereich wird insbesondere vom Betrieb der Druckänderungseinrichtung hervorgerufen. Er kann beispielsweise dem Spülen des Kraftstoffdämpfespeichers dienen. Zweckmäßigerweise kann bei dieser Ausgestaltung zur Erfüllung des ersten Plausibilitätskriterium zusätzlich erforderlich sein, dass der Fluidmassestrom oder ein Zeitintegral des Fluidmassestroms über den ersten Zeitraum - d.h. insbesondere die Masse des Fluids, die während des ersten Zeitraums aus dem Speicherbereich hinaus oder in den Speicherbereich hinein fließt - einen vorgegebenen Minimalwert erreicht oder überschreitet. Mit dieser Ausgestaltung kann eine gesteigerte Zuverlässigkeit des Verfahrens erzielt sein.

Bei einer Ausgestaltung werden die Schritte des Verfahrens mehrmals wiederholt durchgeführt, insbesondere wird das Verfahren in seiner Gesamtheit mehrmals wiederholt durchgeführt. Auf diese Weise kann eine besonders zuverlässige Diagnose von Schließ-Fehlern des Absperrventils erzielt sein.

In einer Ausgestaltung des Verfahrens werden für den Fall, dass kein Schließ-Fehler des Absperrventils erkannt wird, folgende Schritte durchgeführt:
- Steuern des Absperrventils im Sinne des geöffneten Zustands,
- Auswerten der erfassten Ausgangssignale der Druckerfassungseinrichtung dahingehend, ob eine durch das Steuern des Absperrventils im Sinne des geöffneten Zustands verursachte zweite Druckänderung im Speicherraum ein zweites Plausibilitätskriterium erfüllt
- Erkennen eines Fehlers des Absperrventils, falls die Auswertung ergibt, dass das zweite Plausibilitätskriterium nicht erfüllt.

Durch das Steuern des Absperrventils im Sinne des geöffneten Zustands sollten der Speicherbereich und der Tankbereich pneumatisch verbunden werden. Im Gutfall, also wenn sich das steuerbare Absperrventil ordnungsgemäß in die geöffnete Position bewegen lässt, findet ein Druckausgleich zwischen Tankbereich und Speicherbereich statt. Das pneumatische Volumen erweitert sich schlagartig um das Volumen des Tankbereichs. Im Schlechtfall, also wenn sich das steuerbare Absperrventil nicht in die geöffnete Position bewegen lässt und im geschlossenen Zustand verharrt (klemmt), ist ein Druckausgleich zwischen Tankbereich und Speicherbereich weiterhin nicht möglich. Das pneumatische Volumen, beschränkt sich dann weiterhin auf das Volumen des Speicherbereichs. Das Steuern des Absperrventils im Sinne des geöffneten Zustands würde im Gutfall daher zu einer markanten Veränderung des Drucks im Speicherbereich führen. Dieser Effekt erlaubt eine Plausibilisierung des Druckverlaufs und daher einen Rückschluss auf die Funktionsfähigkeit des Absperrventils. Wird erkannt, dass die zweite Druckänderung das zweite Plausibilitätskriterium nicht erfüllt, so wird ein Fehler des Absperrventils erkannt. In diesem Schlechtfall wäre festzustellen, dass das Absperrventil sich nicht mehr in den geöffneten Zustand bewegen lässt, bzw. dass es im geschlossenen Zustand klemmt.

Gemäß einer Ausgestaltung des Verfahrens ergibt die Auswertung, dass das zweite Plausibilitätskriterium erfüllt ist, falls
- nach dem Steuern des Absperrventils im Sinne des geöffneten Zustands eine Druckgradientenänderung im Speicherbereich und/oder im Tankbereich einen vorgegebenen Minimalwert zumindest erreicht oder ein zweiter Druckgradient im Speicherbereich und/oder im Tankbereich sich innerhalb eines vorgegebenen zweiten Druckgradientenwertebereichs befindet, oder
- nach dem Steuern des Absperrventils im Sinne des geöffneten Zustands sich der Druck im Speicherbereich und/oder im Tankbereich mindestes um einen vorgegebenen zweiten Minimalbetrag ändert oder der Druck im Speicherbereich und/oder im Tankbereich sich innerhalb eines vorgegebenen zweiten Druckwertebereichs befindet, oder
- nach dem Steuern des Absperrventils im Sinne des geöffneten Zustands ein zweiter Druckverlauf im Speicherbereich und/oder im Tankbereich einem vorgegebenen zweiten Referenzverlauf folgt oder der zweite Druckverlauf innerhalb eines vorgegebenen zweiten Toleranzbereichs um den zweiten Referenzverlauf bleibt

In einer Ausgestaltung des Verfahrens weist die Druckänderungseinrichtung weiterhin auf:
- eine Belüftungsleitung, über welche der Kraftstoffdämpfespeicher mit der Umgebung verbunden ist,
- ein steuerbares Belüftungsventil, welches in der Belüftungsleitung angeordnet ist, um den Gasstrom durch die Belüftungsleitung zu steuern,
- eine Entlüftungsleitung, über welche der Kraftstoffdämpfespeicher mit einer Unterdruckquelle verbunden ist,
- ein steuerbares Entlüftungsventil, welches in der Entlüftungsleitung angeordnet ist, um den Gasstrom durch die Entlüftungsleitung zu steuern,
wobei zur Änderung des Drucks im Speicherbereich das Belüftungsventil geschlossen und das Entlüftungsventil geöffnet wird, um einen Unterdruck im Speicherbereich zu erzeugen.

Durch Öffnen des Entlüftungsventils wird der Speicherbereich mit der Unterdruckquelle pneumatisch verbunden. Bei der Unterdruckquelle handelt es sich beispielsweise um ein Luftansaugrohr eines Verbrennungsmotors, eine Venturidüse, eine Saugstrahldüse, oder eine Unterdruckpumpe. Im Luftansaugrohr des Verbrennungsmotors herrscht stromabwärts eines darin angeordneten Drosselorgans in vielen Betriebszuständen des Verbrennungsmotors ein Unterdruck. Durch Verbinden des Speicherraums mit dem Luftansaugrohr an diese Position kommt es zu einem Gasstrom in Richtung des Verbrennungsmotors und zu einer Evakuierung des Speicherbereichs. Nach diesem Ausführungsbeispiel führt die Aktivierung der Druckänderungseinrichtung zu einem Unterdruck im Speicherbereich.

In einer anderen Ausgestaltung des Verfahrens weist die Druckänderungseinrichtung auf:
- eine Belüftungsleitung, über welche der Kraftstoffdämpfespeicher mit der Umgebung verbunden ist,
- ein steuerbares Belüftungsventil, welches in der Belüftungsleitung angeordnet ist, um den Gasstrom durch die Belüftungsleitung zu steuern,
- eine Entlüftungsleitung, über welche der Kraftstoffdämpfespeicher mit einer Unterdruckquelle verbunden ist,
- ein steuerbares Entlüftungsventil, welches in der Entlüftungsleitung angeordnet ist, um den Gasstrom durch die Entlüftungsleitung zu steuern,
wobei zur Änderung des Drucks im Speicherbereich das Belüftungsventil und das Entlüftungsventil geöffnet werden, um einen Unterdruck im Speicherbereich zu erzeugen.

Diese Ausgestaltung ist eine Alternative zur vorhergehend beschriebenenen Ausgestaltung, wobei das Belüftungsventil nicht geschlossen, sondern geöffnet wird. Dadurch wird ein Spüleffekt im Kraftstoffdämpfespeicher erreicht, wodurch dieser regeneriert wird. Zwar kann dabei nur ein geringerer Unterdruck erzeugt, jedoch kann die Funktionsüberprüfung des Absperrventils zeitgleich während eines Spülvorgangs des Kraftstoffdämpfespeicher durchgeführt werden, was ja ohnehin von Zeit zu Zeit erforderlich ist. Zur Erzeugung eines möglichst starken Unterdrucks kann das Entlüftungsventil maximal geöffnet werden und der Vorgang bevorzugt dann durchgeführt werden, wenn der durch die Unterdruckquelle erzeugt Unterdruck besonders hoch ist.

In einer wiederum anderen Ausgestaltung des Verfahrens weist die Druckänderungseinrichtung auf:
- eine Belüftungsleitung, über welche der Kraftstoffdämpfespeicher mit der Umgebung verbunden ist,
- ein steuerbares Belüftungsventil, welches in der Belüftungsleitung angeordnet ist, um den Gasstrom durch die Belüftungsleitung zu steuern,
- eine steuerbare Pumpe, welche in der Belüftungsleitung stromabwärts des Belüftungsventils angeordnet ist, um zur Erzeugung eines Überdrucks im Speicherbereich Umgebungsluft aus der Atmosphäre in den Kraftstoffdämpfespeicher zu pumpen,
- eine Entlüftungsleitung, über welche der Kraftstoffdämpfespeicher mit einer Unterdruckquelle verbunden ist,
- ein steuerbares Entlüftungsventil, welches in der Entlüftungsleitung angeordnet ist, um den Gasstrom durch die Entlüftungsleitung zu steuern,
wobei zu Änderung des Drucks im Speicherbereich das Belüftungsventil geöffnet, das Entlüftungsventil geschlossen und die Pumpe betrieben wird, um im Speicherbereich einen Überdruck zu erzeugen.

Diese Ausgestaltung stellt eine weitere Alternative zu den Ausgestaltung nach den beiden vorstehend beschriebenen Ausgestaltungen dar. Das Pumpen von Umgebungsluft in den Speicherbereich führt dort zu einem Überdruck.

Bei einer Ausgestaltung des Verfahrens stellt die Speicherdruckerfassungseinrichtung einen virtuellen Sensor dar. In diesem Fall braucht im Speicherbereich mit Vorteil kein physischer Sensor für die Erfassung des Speicherdrucks vorhanden sein, wie dies bei anderen Ausgestaltungen der Verfahrens der Fall sein kann. Das Verfahren kann auf diese Weise besonders kostengünstig durchgeführt werden. Bei der vorliegenden Ausgestaltung werden die Ausgangssignale der Speicherdruckerfassungseinrichtung, die den Druck im Speicherbereich repräsentieren, zum Beispiel basierend auf dem Druck modelliert, der an stromabwärts des Entlüftungsventils gemessen oder für eine Stelle stromabwärts des Entlüftungsventils aus einem oder mehreren anderen Parametern berechnet wird, zum Beispiel mithilfe eines trainierten neuronalen Netzes.

Gemäß einem weiteren Aspekt wird ein Computerprogrammprodukt offenbart, das in den Speicher eines Computers geladen werden kann. Es weist Softwarecodeabschnitte auf, welche bei Ausführung auf einem Computer zur Durchführung des Verfahrens nach mindestens einer der vorstehend beschriebenen Ausgestaltungen, Ausführungsformen und Varianten führen. Weiterhin wird ein Datenträger offenbart, auf dem das Computerprogrammprodukt ist gespeichert ist. Das Computerprogrammprodukt enthält bei einer Ausgestaltung Kennfelder, insbesondere kalibrierte Kennfelder, für die in Abhängigkeit vom maximalen Druckgradienten des Drucks im Speicherbereich vorgegebenen Grenzwerte des maximale Druckgradienten des Drucks im Tankbereich und für die Schwellwerte für den Betrag des Gradienten des Druckverlaufs im Speicherbereich. Gemäß einem weiteren Aspekt wird eine Steuervorrichtung zur Steuerung einer Tankentlüftungsanlage offenbart, die einen Computer und einen Speicher aufweist, auf dem das Computerprogrammprodukt geladen ist.

Eine solche Steuervorrichtung ist ferner mit allen notwendigen Schnittstellen ausgestaltet, um an eine Tankentlüftungsanalage angeschlossen zu werden. Bei Betrieb der Steuervorrichtung wird das darauf geladene Computerprogrammprodukt ablaufen und das Verfahren durchgeführt.

Bezüglich der Vorteile des Computerprogrammprodukts und der Steuervorrichtung wird auf die Ausführungen zum Verfahren verwiesen, welche in analoger Weise gelten.

Im Folgenden wird die Erfindung anhand eines Ausführungsbeispiels mit Bezug auf die beigefügten Figuren näher erläutert. In den Figuren sind:
Fig. 1 Eine schematische Darstellung einer Tankentlüftungsanlage für ein Kraftfahrzeug:
Fig. 2 Ein Ablaufdiagramm eines Ausführungsbeispiels eines Verfahrens zur Überprüfung der Tankentlüftungsanlage

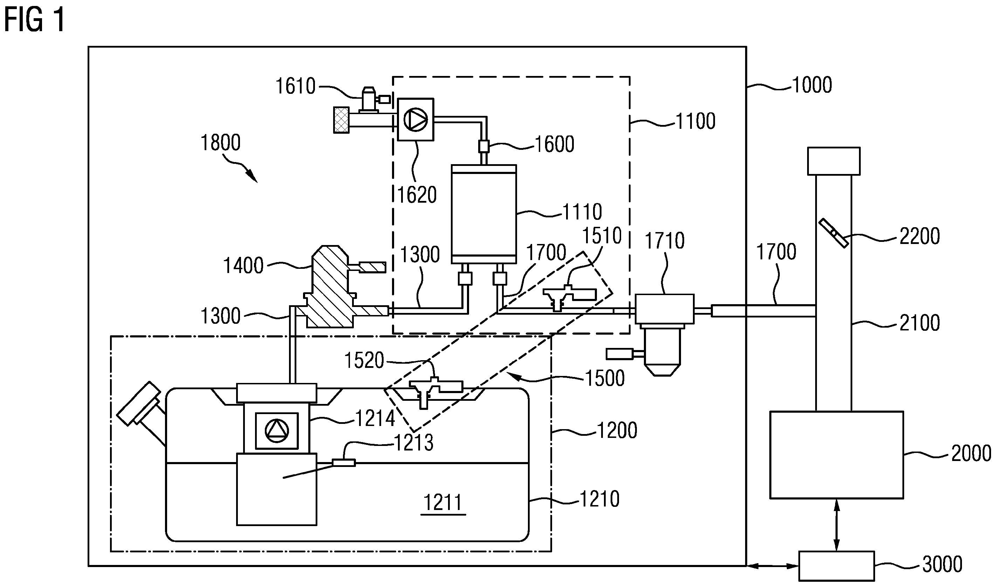

In Fig. 1 ist eine Tankentlüftungsanlage 1000 für ein Kraftfahrzeug (nicht dargestellt) mit Verbrennungsmotor 2000 schematisch dargestellt. Die Tankentlüftungsanlage 1000 weist einen Speicherbereich 1100 und einen Tankbereich 1200 auf.

Im Ausführungsbeispiel weist der Tankbereich 1200 einen Kraftstofftank 1210 zur Speicherung von Kraftstoff 1211, einen Füllstandsensor 1213 sowie eine Förderpumpe 1214 zur Förderung von Kraftstoff in Richtung des Verbrennungsmotors 2000 auf.

Im Ausführungsbeispiel weist der Speicherbereich 1100 einen Kraftstoffdämpfespeicher 1110 auf. Der Kraftstoffdämpfespeicher 1110 ist als Aktivkohlebehälter ausgebildet und dient der temporären Speicherung von Kohlewasserstoffen, welche aus dem Kraftstofftank 1210 ausgasen.

Speicherbereich 1100 und Tankbereich 1200 sind über eine Entgasungsleitung 1300 miteinander gekoppelt. In der Entgasungsleitung 1300 ist ein steuerbares Absperrventil 1400 angeordnet, welches in einem geschlossenen Zustand einen Druckausgleich zwischen dem Tankbereich 1200 und dem Speicherbereich 1100 unterbindet, und welches in einem geöffneten Zustand einen Druckausgleich zwischen dem Tankbereich 1200 und dem Speicherbereich 1100 erlaubt. Das Absperrventil 1400 kann als pulsweitenmoduliertes, elektrisches Ventil ausgebildet sein.

Zur Tankentlüftungsanlage 1000 zählt weiterhin eine Belüftungsleitung 1600, über welche der Kraftstoffdämpfespeicher 1110 mit der Atmosphäre bzw. der Umgebung verbunden ist, sowie ein steuerbares Belüftungsventil 1610, welches in der Belüftungsleitung 1600 angeordnet ist, um den Gasstrom durch die Belüftungsleitung 1600 zu steuern. Stromabwärts des Belüftungsventils 1610 ist in der Belüftungsleitung 1600 ferner eine steuerbare Pumpe 1620 angeordnet, welche zur Erzeugung eines Überdrucks im Speicherbereich 1100 bei geöffnetem Belüftungsventil 1610 Umgebungsluft aus der Atmosphäre in den Kraftstoffdämpfespeicher 1110 pumpt.

Der Kraftstoffdämpfespeicher 1110 ist ferner über eine Entlüftungsleitung 1700 mit einer Unterdruckquelle 2100 verbunden. Im Ausführungsbespiel dient als Unterdruckquelle ein Luftansaugrohr 2100 des Verbrennungsmotors 2000. Die Entlüftungsleitung mündet an einer Position des Luftansaugrohrs 2100 stromabwärts eines im Luftansaugrohr 2100 angeordneten Drosselorgans 2200 (Drosselklappe). Bei Betrieb des Verbrennungsmotors 2000 herrscht an dieser Position Unterdruck. Alternativ kann als Unterdruckquelle auch eine Venturi- oder Saugstrahldüse verwendet werden. In der Entlüftungsleitung 1700 ist ein steuerbares Entlüftungsventil 1710 angeordnet, mittels dem der Gasstrom durch die Entlüftungsleitung 1700 gesteuert werden kann.

Der Tankbereich ist durch den Kraftstofftank 1210, das Absperrventil 1400 und den dazwischenliegenden Abschnitt der Entgasungsleitung 1300 begrenzt.

Der Speicherbereich ist durch den Kraftstoffdämpfespeicher 1110, das Absperrventil 1400, den zwischen Kraftstoffdämpfespeicher 1110 und Absperrventil 1400 liegenden Abschnitt der Entgasungsleitung 1300, das Belüftungsventil 1610, den zwischen Kraftstoffdämpfespeicher 1110 und Belüftungsventil 1610 liegenden Abschnitt der Belüftungsleitung 1600, das Entlüftungsventil 1710 und den zwischen Kraftstoffdämpfespeicher 1110 und Entlüftungsventil 1710 liegenden Abschnitt der Entlüftungsleitung 1700 begrenzt.

Die Belüftungsleitung 1600, das steuerbare Belüftungsventil 1610, die Pumpe 1620, die Entlüftungsleitung 1700 und das steuerbare Entlüftungsventil 1710 bilden zusammen eine Druckänderungseinrichtung 1800, mittels der der Druck im Speicherbereich 1100 geändert werden kann. Zur Erzeugung eines Überdrucks im Speicherbereich 1100 (relativ zum Druck im Tankbereich 1200) wird das Absperrventil 1400 geschlossen, das Entlüftungsventil 1710 geschlossen, das Belüftungsventil 1610 geöffnet und die Pumpe 1620 betrieben. Alternativ wird zur Erzeugung eines Unterdrucks im Speicherbereich 1100 (relativ zum Druck im Tankbereich 1200) das Absperrventil 1400 geschlossen, das Belüftungsventil 1610 geschlossen und das Entlüftungsventil 1710 geöffnet, wodurch der Speicherbereich 1100 mit dem Luftansaugrohr verbunden wird.

Zur Tankentlüftungsanalage zählt ferner eine Druckermittlungseinrichtung 1500, welche einen Speicherdrucksensor 1510 zur Erfassung des Gasdrucks im Speicherbereich 1100 aufweist. Die Druckermittlungseinrichtung 1500 weist zusätzlich einen Tankdrucksensor 1520 zur Erfassung des Gasdrucks im Tankbereich 1200 auf. Im Ausführungsbeispiel der Fig. 1 sind der Speicherdrucksensor 1510 in der Entlüftungsleitung stromaufwärts des Entlüftungsventils 1710 und der Tankdrucksensor 1520 im Kraftstofftank 1200 angeordnet.

Eine Steuervorrichtung 3000 ist vorgesehen, welche mit der Tankentlüftungsanlage 1000 verbunden ist. Die Steuervorrichtung ist dazu ausgebildet, Ausgangssignale des Speicherdrucksensors 1510 und Ausgangssignale des Tankdrucksensors 1520 zu erfassen, zu speichern, auszuwerten, zu interpretieren, zu quantifizieren, qualitativ und quantitativ zu bewerten und zu vergleichen.

Der im Kraftstofftank 1210 enthaltene Kraftstoff neigt zur Ausgasung von Kohlenwasserstoffen. Im geschlossenen Zustand verhindert das Absperrventil 1400 den Austritt der gasförmigen Kohlenwasserstoffe aus dem Tankbereich 1200, wodurch der Druck dort immer weiter ansteigt. Von Zeit zu Zeit ist eine Entlastung des Tankbereichs 1200 notwendig. Durch Versetzen des Absperrventils 1400 in den geöffneten Zustand fließen die gasförmigen Kohlenwasserstoffe aufgrund des Druckgefälles kontrolliert in den Kraftstoffdämpfespeicher 1110 ab und werden dort zwischengespeichert. Der Kraftstoffdämpfespeicher 1110 hat jedoch eine begrenzte Kapazität und muss von Zeit zu Zeit regeneriert werden. Dazu wird das Absperrventil 1400 geschlossen und das Belüftungsventil 1610 geöffnet. Durch Steuern des Entlüftungsventils 1710 wird der Kraftstoffdämpfespeicher 1110 mit dem Luftansaugrohr 1700 verbunden, wodurch es aufgrund des herrschenden Druckgefälles zu einem Spüleffekt kommt, wobei die gespeicherten Kohlenwasserstoffe in das Luftansaugrohr 1700 gesaugt und anschließend dem Verbrennungsmotor 2000 zugeführt werden, wo sie an der Verbrennung teilnehmen. Der Spülvorgang kann durch Betrieb der Pumpe 1620 unterstützt werden, was ein Spülen des Kraftstoffdämpfespeicher 1110 auch bei sehr geringem Unterdruck um Luftansaugrohr ermöglicht.

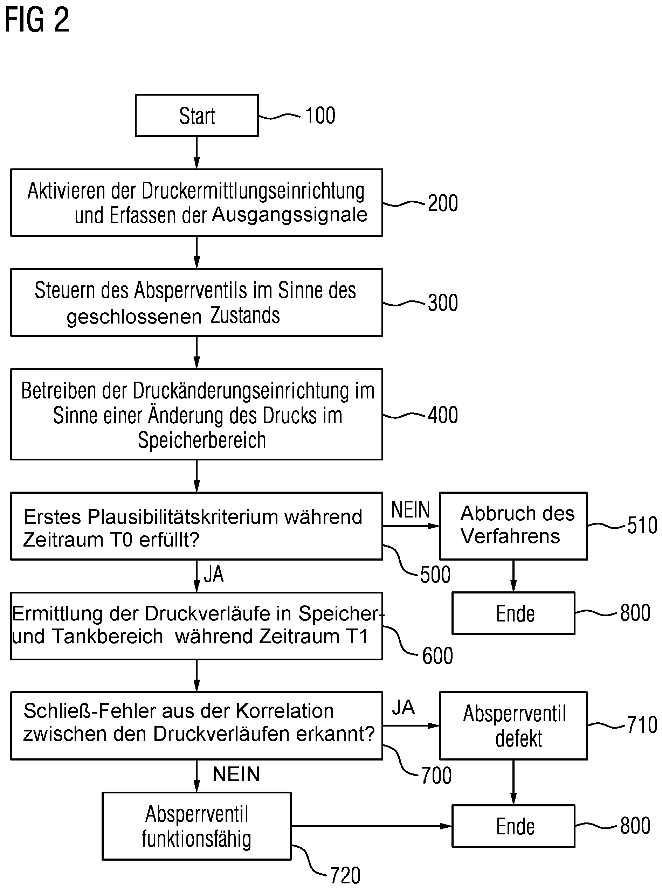

Es ist gesetzlich vorgeschrieben, die Funktionsweise des Absperrventils 1400 zu überprüfen. Ein Ausführungsbeispiel eines Verfahrens zur Überprüfung des Absperrventils 1400 wird mit Bezug auf das Ablaufdiagramm der Fig. 2 näher erläutert:
Das Verfahren startet mit Schritt 100, beispielsweise beim Start des Verbrennungsmotors durch einen Fahrzeugführer.

In Schritt 200 wird die Druckerfassungseinrichtung 1500 aktiviert bzw. betrieben und deren Ausgangssignale erfasst. Dies bedeutet, dass aktuelle Ausgabewerte des Speicherdrucksensor 1510, welche den Druck im Speicherbereich repräsentieren, und aktuelle Ausgabewerte des Tankdrucksensors 1520, welche den Druck im Kraftstofftank repräsentieren, in vorgegebenen zeitlichen Abständen oder kontinuierlich z.B. durch die Steuereinrichtung 3000 erfasst und gespeichert werden. Die Erfassung und Speicherung dieser aktuellen Ausgangssignale erfolgt dann während aller folgenden Verfahrensschritte.

In Schritt 300 wird das Absperrventil 1400 im Sinne des geschlossenen Zustands gesteuert. Im geschlossenen Zustand ist ein Druckausgleich und ein Gasstrom zwischen dem Speicherbereich 1100 und dem Tankbereich 1200 unterbunden. Die Steuerung im Sinne des geschlossenen Zustands kann beispielsweise durch stromlos Schalten des Absperrventils 1400 erfolgen, wenn es sich um ein stromlos geschlossenes Ventil handelt.

In Schritt 400 wird die Druckänderungseinrichtung 1800 im Sinne einer Änderung des Drucks im Speicherbereich 1100 betrieben. Bei einer Ausgestaltung des Verfahrens bleibt die Druckänderungseinrichtung 1800 während des gesamten Verfahrens aktiviert. Zur Erzeugung eines Überdrucks wird das Entlüftungsventil 1710 geschlossen, das Belüftungsventil 1610 geöffnet und die Pumpe 1620 betrieben. Zur Erzeugung eines Unterdrucks wird das Belüftungsventil 1610 geschlossen oder geöffnet und das Entlüftungsventil 1710 geöffnet, wodurch der Speicherbereich 1100 mit dem Luftansaugrohr 2000 als Unterdruckquelle verbunden wird.

In Schritt 500 wird aus den erfassten Ausgangssignalen der Druckerfassungseinrichtung 1500, insbesondere dem Ausgabewerten des Speicherdrucksensors 1510, ein Druckverlauf im Speicherbereich 1100 über einen ersten Zeitraum T0 ermittelt und dahingehend ausgewertet, ob eine durch den Betrieb der Druckänderungseinrichtung 1800 verursachte erste Druckänderung im Speicherraum 1100 ein erstes Plausibilitätskriterium erfüllt. Der Begriff "erste Druckänderung" steht dabei nicht nur für die wertmäßige Änderung des Druck zu einem bestimmten Zeitpunkt sondern ist repräsentativ für alle quantitativen und qualitativen Kriterien, Werte, Wertmengen, Zahlen, Zahlenmengen, Kennzahlen und -werte, mit denen eine Veränderung des Drucks im Speicherbereich 1100 charakterisiert oder quantifiziert oder bewertet werden kann, z.B. der Druckgradient, der Druckverlauf (Abfolge mehrerer Druckwerte zu unterschiedlichen Zeitpunkten), die wertmäßige Druckäderung zu einem bestimmten Zeitpunkt, der tatsächliche Druckwert zu einem bestimmten Zeitpunkt relativ zu einem vorgegebenen festen Vergleichswert, usw.

So gilt das erste Plausibilitätskriterium z.B. dann als erfüllt, falls während des Betriebs der Druckänderungseinrichtung 1800 ein auf Basis der Ausgabewerte des Speicherdrucksensor 1510 ermittelter erster Druckgradient im Speicherbereich 1100 einen vorgegebenen ersten Gradientengrenzwert zumindest erreicht oder der erste Druckgradient im Speicherbereich (1100) innerhalb eines vorgegebenen ersten Druckgradientenwertebereichs bleibt oder falls ein erster Druckverlauf im Speicherbereich 1100 einem vorgegebenen ersten Referenzverlauf folgt oder der erste Druckverlauf innerhalb eines vorgegebenen ersten Toleranzbereichs um den ersten Referenzverlauf bleibt. Der Gradientengrenzwert bzw. der Druckgradientenwertebereich bzw. der Referenzverlauf sind dabei zweckmäßig so vorgegeben, dass das erste Plausibilitätskriterium nur dann erfüllt ist, wenn der Betrag des Druckgradienten im Speicherbereich 1100 während des ersten Zeitraums T0 einen vorgegebenen, zweckmäßig von Null verschiedenen Schwellwert nicht unterschreitet.

Bei einer Variante des Verfahrens wird während des ersten Zeitraums T0 ein vom Betrieb der Druckänderungseinrichtung 1800 hervorgerufener Fluidmassestrom, der auch als Spülmassestrom bezeichnet werden kann, durch den Speicherbereich ermittelt. Die Ermittlung erfolgt beispielsweise mittels Modellierung aus Messwerten, z.B. Messwerten der Druckerfassungseinrichtung 1500. Bei dieser Variante is zur Erfüllung des ersten Plausibilitätskriterium zusätzlich erforderlich dass das Zeitintegral des Fluidmassestroms über den ersten Zeitraum T0 einen vorgegebenen Minimalwert erreicht oder überschreitet.

Wird in Schritt 500 festgestellt, dass das erste Plausibilitätskriterium nicht erfüllt ist, so wird in Schritt 510 das Verfahren abgebrochen, insbesondere da die vorliegende Druckänderung dann keine zuverlässige Auswertung der Druckverläufe erlaubt, und das Verfahren in Schritt 800 beendet.

Wird in Schritt 500 festgestellt, dass das erste Plausibilitätskriterium erfüllt ist, so fährt das Verfahren mit Schritt 600 fort, wobei ein Zeitzähler gestartet wird und die Druckverläufe im Speicherbereich 1100 und im Tankbereich 1200 ermittelt werden, indem Ausgangssignale der Speicherdruckerfassungseinrichtung 1510 und der Tankdruckerfassungseinrichtung 1520 über einen zweiten Zeitraum T1 erfasst werden. Die Dauer des zweiten Zeitraums wird vorliegend anhand von vorgegeben Zeitdauern in Abhängigkeit von Ausgangssignalen des Füllstandsensors 1213 gewählt.

In Schritt 700 wird eine Korrelation zwischen den über den zweiten Zeitraum T1 ermittelten Druckverläufen im Speicherbereich 1100 und im Tankbereich 1200 ausgewertet. Weiterhin wird ein Schließ-Fehler des Absperrventils 1400 in Abhängigkeit von der Korrelation zwischen den über den zweiten Zeitraum T1 ermittelten Druckverläufen im Speicherbereich 1100 und im Tankbereich 1200 erkannt. Dabei wird vorliegend ein Schließ-Fehler des Absperrventils 1400 erkannt, falls während des zweiten Zeitraums T1 die Gradienten der Druckverläufe des Drucks im Tankbereich 1200 und des Drucks im Speicherbereich 1100 das gleiche Vorzeichen haben und der maximale Druckgradient des Drucks im Tankbereich 1200 im Verhältnis zum maximalen Druckgradienten des Drucks im Speicherbereich 1100 innerhalb des zweiten Zeitraums T1 einen vorgegebenen Grenzwert überschreitet.

Bei einer Ausgestaltung des Verfahrens wird nachfolgend das Absperrventil 1400 im Sinne des offenen Zustands gesteuert, sofern kein Schließ-Fehler erkannt wird. Diese Ausgestaltung ist nicht in Fig. 2 gezeigt.

Dieser Schritt (d.h. das Steuern des Absperrventils im Sinne des offenen Zustands) kann davon abhängig gemacht werden, ob sich der Druck im Tankbereich 1200 vom Druck im Speicherbereich 1100 um ein vorgegebenes Mindestmaß unterscheidet, wobei das Steuern des Absperrventils 1400 im Sinne des offenen Zustand erst bei einem positiven Prüfergebnis erfolgt. Im offenen Zustand ist ein Druckausgleich und ein Gasstrom zwischen dem Speicherbereich 1100 und dem Tankbereich 1200 nun möglich. Wie bei Schritt 400 erwähnt, wird die Druckänderungseinrichtung 1800 weiterhin im Sinne einer Druckänderung im Speicherbereich betrieben.

In einem nachfolgenden Schritt werden bei dieser Ausgestaltung die erfassten Ausgangssignale der Druckerfassungseinrichtung 1500 dahingehend ausgewertet, ob die durch das Steuern des Absperrventils 1400 im Sinne des offenen Zustands verursachte zweite Druckänderung im Speicherbereich 1100 ein zweites Plausibilitätskriterium erfüllt. In diesem Schritt wird überprüft, ob die zweite Druckänderung im Speicherbereich 1100 unter der Annahme eines tatsächlich offenen Absperrventils 1400 plausibel ist. Denn im Falle, dass sich das Absperrventil 1400 nun tatsächlich im geöffneten Zustand befindet, ist eine markante zweite Druckänderung erkennbar im Vergleich zu dem Fall, dass das Absperrventil im geschlossenen Zustand verbleibt (klemmt). Auch der Begriff "zweite Druckänderung" steht dabei nicht nur für die wertmäßige Änderung des Druck zu einem bestimmten Zeitpunkt sondern ist repräsentativ für alle quantitativen und qualitativen Kriterien, Werte, Wertmengen, Zahlen, Zahlenmengen, Kennzahlen und -werte, mit denen eine Veränderung des Drucks im Speicherbereich charakterisiert oder quantifiziert oder bewertet werden kann, z.B. der Druckgradient, der Druckverlauf (Abfolge mehrerer Druckwerte zu unterschiedlichen Zeitpunkten), die wertmäßige Druckänderung zu einem bestimmten Zeitpunkt, der tatsächliche Druckwert zu einem bestimmten Zeitpunkt relativ zu einem vorgegebenen festen Vergleichswert, usw. Als Basis zur Ermittlung "zweiten Druckänderung" dienen die Ausgabewerte des Speicherdrucksensors.

So gilt das zweite Plausibilitätskriterium z.B. dann als erfüllt, falls nach dem Steuern des Absperrventils 1400 im Sinne des geöffneten Zustands eine Druckgradientenänderung im Speicherbereich (1100) einen vorgegebenen Minimalwert zumindest erreicht oder ein zweiter Druckgradient im Speicherbereich (1100) sich innerhalb eines vorgegebenen zweiten Druckgradientenwertebereichs befindet. Dabei ist der vorgegebene Minimalwert so bedatet, dass für den Fall, dass die zweite Druckgradientenänderung diesen zumindest erreicht, von einem tatsächlich geöffneten Absperrventil 1400 auszugehen ist. Entsprechend ist der vorgegebene zweite Druckgradientenwertebereich so bedatet, dass für den Fall, dass sich der zweite Druckgradient in diesem zweiten Druckgradientenwertebereich befindet, von einem ordnungsgemäß geöffneten Absperrventil 1400 auszugehen ist.

Das zweite Plausibilitätskriterium gilt z.B. auch dann als erfüllt, falls nach dem Steuern des Absperrventils im Sinne des geöffneten Zustands sich der Druck im Speicherbereich (1100) um mindestens einen vorgegebenen zweiten Druckbetrag ändert oder der Druck im Speicherbereich (1100) sich innerhalb eines vorgegebenen zweiten Druckwertebereichs befindet. Dabei ist der vorgegebene zweite Druckbetrag so bedatet, dass für den Fall, dass der zweite Druck sich mindestens um diesen zweiten Druckbetrag ändert, von einem ordnungsgemäß geöffneten Absperrventil 1400 auszugehen ist. Entsprechend ist der vorgegebene zweite Druckwertebereich so bedatet, dass für den Fall, dass der Druck im Speicherbereich 1100 sich in diesem zweiten Druckwertebereich befindet, von einem ordnungsgemäß geöffneten Absperrventil 1400 auszugehen ist.

Das zweite Plausibilitätskriterium gilt z.B. auch dann als erfüllt, falls nach dem Steuern des Absperrventils im Sinne des geöffneten Zustands ein zweiter Druckverlauf im Speicherbereich 1100 einem vorgegebenen zweiten Referenzverlauf folgt oder der zweite Druckverlauf innerhalb eines vorgegebenen zweiten Toleranzbereichs um den zweiten Referenzverlauf bleibt. Dabei ist der vorgegebene zweite Referenzverlauf so bedatet, dass für den Fall, dass der zweite Druckverlauf dem zweiten Referenzverlauf folgt, von einem ordnungsgemäß geöffneten Absperrventil 1400 auszugehen ist. Entsprechend ist der vorgegebene zweite Toleranzbereich so bedatet, dass für den Fall, dass der zweite Druckverlauf innerhalb dieses zweiten Toleranzbereichs liegt, von einem ordnungsgemäß geöffneten Absperrventil 1400 auszugehen ist.

Die Bedatungen können beispielsweise durch Labortests oder durch Online-Tests im Fahrzeug gewonnen werden.

Wird festgestellt, dass das zweite Plausibilitätskriterium nicht erfüllt ist, so wird in einem weiteren Schritt ein Fehler des Absperrventils 1400 erkannt und das Verfahren in einem nachfolgenden Schritt beendet. Denn wäre das Absperrventil 1400 funktionsfähig, so müsste es durch die Steuerung im Sinne des offenen Zustands seinen offenen Zustand eingenommen haben, wodurch sich der Druck im Speicherbereich 1100 in einem Maße hätte ändern müssen, dass das zweite Druckänderungskriterium erfüllt gewesen wäre. Ist das zweite Druckänderungskriterium jedoch nicht erfüllt, so ist davon auszugehen, dass sich der Druck im Speicherraum 1100 in einem unzureichenden Maße geändert hat, was so gedeutet wird, dass das Absperrventil 1400 im geschlossenen Zustand klemmt, sich also nicht mehr in den offenen Zustand versetzen lässt.

Wird festgestellt, dass das zweite Plausibilitätskriterium erfüllt ist, fährt das Verfahren mit einem Schritt fort, bei dem das Absperrventil 1400 als funktionsfähig beurteilt wird und wird dann in einem weiteren Schritt beendet.

Das Verfahren kann regelmäßig und/oder in bestimmten Betriebszuständen des Verbrennungsmotors wiederholt werden.

Das Verfahren kann als Computerprogrammprodukt realisiert werden, welches auf einem Rechner (Mikrocomputer) geladen werden kann. Das Computerprogrammprodukt weist Softwarecodeabschnitte auf, bei deren Ausführung auf dem Rechner entsprechende Rechenoperationen ausgeführt, Steuerbefehle ausgegeben und Daten eingelesen und verarbeitet werden. Das Computerprogrammprodukt kann im Speicher einer Steuervorrichtung 3000 (Steuergerät) geladen sein, wie sie in Fig. 1 schematisch dargestellt ist. Die Steuervorrichtung 3000 weist alle erforderlichen Ausstattungsmerkmale auf, die zur Speicherung und Ausführung des Computerprogrammprodukts, zur Übermittlung und zum Empfang von Daten, sowie zur Steuerung der Tankentlüftungsanlage erforderlich sind. Insbesondere weist die Steuervorrichtung 3000 einen digitalen Speicher, einen Prozessor und Schnittstellen zur Kopplung mit Bestandteilen der Tankentlüftungsanlage 1000 und dem Verbrennungsmotor 2000 auf.

## Patentansprüche

1. Verfahren zur Überprüfung der Funktionsfähigkeit eines steuerbaren Absperrventils (1400) in einer Tankentlüftungsanlage (1000), welche aufweist:
- einen Tankbereich (1200), welcher einen Kraftstofftank (1210) aufweist,
- einen Speicherbereich (1100), welcher einen Kraftstoffdämpfespeicher (1110) aufweist,
- eine Entgasungsleitung (1300), welche den Kraftstoffdämpfespeicher (1110) und den Kraftstofftank (1210) verbindet,
- das steuerbare Absperrventil (1400), welches in der Entgasungsleitung (1300) angeordnet ist und welches in einem geschlossenen Zustand einen Druckausgleich zwischen dem Tankbereich (1200) und dem Speicherbereich (1100) unterbindet, und welches in einem geöffneten Zustand einen Druckausgleich zwischen dem Tankbereich (1200) und dem Speicherbereich (1100) erlaubt,
- eine Druckänderungseinrichtung (1800), welche mit dem Speicherbereich verbunden ist, um den Druck im Speicherbereich (1100) zu ändern,
- eine Druckerfassungseinrichtung (1500), die eine Speicherdruckerfassungseinrichtung (1510) zur Erfassung des Drucks im Speicherbereich (1100) und eine Tankdruckerfassungseinrichtung (1520) zur Erfassung des Drucks im Tankbereich (1200) aufweist,
wobei das Verfahren folgende Schritte aufweist:
- Detektion eines geschlossenen Sollzustands des Absperrventils oder Steuern des Absperrventils (1400) im Sinne des geschlossenen Sollzustands,
- Aktivieren der Druckerfassungseinrichtung (1500),
- Betreiben der Druckänderungseinrichtung (1800) im Sinne einer Änderung des Drucks im Speicherbereich (1100),
und **gekennzeichnet ist durch** die weiteren Schritte:
- Ermitteln des Druckverlaufs im Speicherbereich (1100) mittels Erfassung von Ausgangssignalen der Speicherdruckerfassungseinrichtung (1510) über einen ersten Zeitraum (T0) und Auswertung des ermittelten Druckverlaufs dahingehend, ob eine durch den Betrieb der Druckänderungseinrichtung (1800) verursachte erste Druckänderung im Speicherraum ein erstes Plausibilitätskriterium erfüllt, und sofern das erste Plausibilitätskriterium erfüllt ist,
- Ermitteln der Druckverläufe im Speicherbereich (1100) und im Tankbereich (1200) mittels Erfassung von Ausgangssignalen der Speicherdruckerfassungseinrichtung (1510) und der Tankdruckerfassungseinrichtung (1520) über einen zweiten Zeitraum (T1),
- Auswerten einer Korrelation zwischen den über den zweiten Zeitraum (T1) ermittelten Druckverläufen im Speicherbereich (1100) und im Tankbereich (1200) und
- Erkennen eines Schließ-Fehlers des Absperrventils (1400) in Abhängigkeit von der Korrelation zwischen den über den zweiten Zeitraum (T1) ermittelten Druckverläufen im Speicherbereich (1100) und im Tankbereich (1200).

2. Verfahren nach Anspruch 1, wobei ein Schließ-Fehler des Absperrventils (1400) erkannt wird, falls während des zweiten Zeitraums (T1) die Gradienten der Druckverläufe des Drucks im Tankbereich (1200) und des Drucks im Speicherbereich (1100) das gleiche Vorzeichen haben und
- der maximale Druckgradient des Drucks im Tankbereich (1200) im Verhältnis zum maximalen Druckgradienten des Drucks im Speicherbereich (1100) innerhalb des zweiten Zeitraums (T1) einen vorgegebenen Grenzwert überschreitet, oder
- die Differenz der Druckgradienten des Drucks im Tankbereich (1200) und des Drucks im Speicherbereich (1100) innerhalb des zweiten Zeitraums (T1) innerhalb eines vorgegebenen Toleranzbereichs bleibt.

3. Verfahren nach einem der vorhergehenden Ansprüche, wobei der Tankbereich (1200) einen Füllstandsensor (1213) aufweist, das Verfahren einen zusätzlichen Schritt aufweist, bei dem ein Signal des Füllstandsensors (1213) erfasst und eine Dauer des zweiten Zeitraums (T1) in Abhängigkeit von dem erfassten Signal des Füllstandsensors (1213) vorgegeben wird.

4. Verfahren nach einem der vorhergehenden Ansprüche, mit einem zusätzlichen Verfahrensschritt, bei dem der Druckverlauf im Speicherbereich (1100) mittels Erfassung von Ausgangssignalen der Speicherdruckerfassungseinrichtung (1510) über einen dritten Zeitraum (T2) ermittelt wird und der ermittelte Druckverlauf dahingehend ausgewertet wird, ob ein drittes Plausibilitätskriterium erfüllt ist, wobei das dritte Plausibilitätskriterium dann erfüllt ist, wenn der über den dritten Zeitraum (T2) ermittelte Druckverlauf im Speicherbereich entweder monoton steigend oder monoton fallend ist,
und wobei die Auswertung des Zusammenhangs zwischen den über den zweiten Zeitraum (T1) erfassten Druckverläufe im Speicherbereich (1100) und im Tankbereich (1200) nur erfolgt, wenn das dritte Plausibilitätskriterium erfüllt ist.

5. Verfahren nach Anspruch 4, wobei der Beginn des zweiten Zeitraums (T1) durch den Start eines Zeitzählers oder der Beginn des zweiten Zeitraums (T1) und des dritten Zeitraums (T2) durch den Start des Zeitzählers definiert ist.

6. Verfahren nach einem der vorhergehenden Ansprüche, wobei während des ersten Zeitraums (T0) ein insbesondere vom Betrieb der Druckänderungseinrichtung (1800) hervorgerufener, Fluidmassestrom durch den Speicherbereich (100) ermittelt wird und zur Erfüllung des ersten Plausibilitätskriterium zusätzlich erforderlich ist, dass ein Zeitintegral des Fluidmassestroms über den ersten Zeitraum (T0) einen vorgegebenen Minimalwert erreicht oder überschreitet.

7. Verfahren nach einem der vorhergehenden Ansprüche, wobei die Verfahrensschritte mehrmals wiederholt durchgeführt werden.

8. Verfahren nach einem der vorhergehenden Ansprüche, wobei für den Fall, dass kein Schließ-Fehler des Absperrventils (1400) erkannt wird, folgende Schritte durchgeführt werden:
- Steuern des Absperrventils (1400) im Sinne des geöffneten Zustands,
- Auswerten der erfassten Ausgangssignale der Druckerfassungseinrichtung (1500) dahingehend, ob eine durch das Steuern des Absperrventils (1400) im Sinne des geöffneten Zustands verursachte zweite Druckänderung im Speicherraum ein zweites Plausibilitätskriterium erfüllt
- Erkennen eines Öffnungs-Fehlers des Absperrventils (1400), falls die Auswertung ergibt, dass das zweite Plausibilitätskriterium nicht erfüllt ist.

9. Verfahren nach dem vorhergehenden Anspruch, wobei die Auswertung ergibt, dass das zweite Plausibilitätskriterium erfüllt ist, falls
- nach dem Steuern des Absperrventils im Sinne des geöffneten Zustands eine Druckgradientenänderung im Speicherbereich (1100) und/oder im Tankbereich (1200) einen vorgegebenen Minimalwert zumindest erreicht oder ein zweiter Druckgradient im Speicherbereich (1100) und/oder im Tankbereich (1200) sich innerhalb eines vorgegebenen zweiten Druckgradientenwertebereichs befindet,
- nach dem Steuern des Absperrventils im Sinne des geöffneten Zustands sich der Druck im Speicherbereich (1100) und/oder im Tankbereich (1200) mindestes um einen vorgegebenen zweiten Druckbetrag ändert oder der Druck im Speicherbereich (1100) und/oder im Tankbereich (1200) sich innerhalb eines vorgegebenen zweiten Druckwertebereichs befindet, oder
- nach dem Steuern des Absperrventils im Sinne des geöffneten Zustands ein zweiter Druckverlauf im Speicherbereich (1100) und/oder im Tankbereich (1200) einem vorgegebenen zweiten Referenzverlauf folgt oder der zweite Druckverlauf innerhalb eines vorgegebenen zweiten Toleranzbereichs um den zweiten Referenzverlauf bleibt.

10. Verfahren nach einem der vorhergehenden Ansprüche, wobei die Druckänderungseinrichtung (1800) aufweist:
- eine Belüftungsleitung (1600), über welche der Kraftstoffdämpfespeicher (1110) mit der Atmosphäre verbunden ist,
- ein steuerbares Belüftungsventil (1610), welches in der Belüftungsleitung (1600) angeordnet ist, um den Gasstrom durch die Belüftungsleitung (1600) zu steuern,
- eine Entlüftungsleitung (1700), über welche der Kraftstoffdämpfespeicher (1110) mit einer Unterdruckquelle (2100) verbunden ist,
- ein steuerbares Entlüftungsventil (1710), welches in der Entlüftungsleitung (1700) angeordnet ist, um den Gasstrom durch die Entlüftungsleitung (1700) zu steuern, wobei zur Änderung des Drucks im Speicherbereich (1100) das Belüftungsventil (1610) geschlossen und das Entlüftungsventil (1710) geöffnet wird, um einen Unterdruck im Speicherbereich (1100) zu erzeugen.

11. Verfahren nach einem der vorhergehenden Ansprüche 1 bis 9, wobei die Druckänderungseinrichtung (1800) aufweist:
- eine Belüftungsleitung (1600), über welche der Kraftstoffdämpfespeicher (1110) mit der Atmosphäre verbunden ist,
- ein steuerbares Belüftungsventil (1610), welches in der Belüftungsleitung (1600) angeordnet ist, um den Gasstrom durch die Belüftungsleitung (1600) zu steuern,
- eine Entlüftungsleitung (1700), über welche der Kraftstoffdämpfespeicher (1110) mit einer Unterdruckquelle (2100) verbunden ist,
- ein steuerbares Entlüftungsventil (1710), welches in der Entlüftungsleitung (1700) angeordnet ist, um den Gasstrom durch die Entlüftungsleitung (1700) zu steuern, wobei zur Änderung des Drucks im Speicherbereich (1100) das Belüftungsventil (1610) und das Entlüftungsventil (1710) geöffnet werden, um einen Unterdruck im Speicherbereich (1100) zu erzeugen.

12. Verfahren nach einem der vorhergehenden Ansprüche 1 bis 9, wobei die Druckänderungseinrichtung (1800) aufweist:
- eine Belüftungsleitung (1600), über welche der Kraftstoffdämpfespeicher (1110) mit der Atmosphäre verbunden ist,
- ein steuerbares Belüftungsventil (1610), welches in der Belüftungsleitung (1600) angeordnet ist, um den Gasstrom durch die Belüftungsleitung (1600) zu steuern,
- eine steuerbare Pumpe (1620), welche in der Belüftungsleitung (1600) stromabwärts des Belüftungsventils (1610) angeordnet ist, um zur Erzeugung eines Überdrucks im Speicherbereich (1100) Umgebungsluft aus der Atmosphäre in den Kraftstoffdämpfespeicher (1110) zu pumpen,
- eine Entlüftungsleitung (1700), über welche der Kraftstoffdämpfespeicher (1110) mit einer Unterdruckquelle (2100) verbunden ist,
- ein steuerbares Entlüftungsventil (1710), welches in der Entlüftungsleitung (1700) angeordnet ist, um den Gasstrom durch die Entlüftungsleitung (1700) zu steuern, wobei zur Änderung des Drucks im Speicherbereich (1100) das Belüftungsventil (1610) geöffnet, das Entlüftungsventil (1710) geschlossen und die Pumpe (1620) betrieben wird, um im Speicherbereich (1100) einen Überdruck zu erzeugen.

13. Verfahren nach einem der vorhergehenden Ansprüche, wobei die Speicherdruckerfassungseinrichtung (1510) einen virtuellen Sensor darstellt und die Ausgangssignale der Speicherdruckerfassungseinrichtung (1510) basierend auf einem stromabwärts des Entlüftungsventils (1710) gemessenen oder berechneten Druck modelliert werden.

14. Computerprogrammprodukt, welches in den Speicher eines Rechners geladen werden kann und welches Softwarecodeabschnitte aufweist, gemäß denen das Verfahren nach einem der vorhergehenden Ansprüche ausgeführt wird, wenn das Computerprogrammprodukt auf dem Rechner läuft.

15. Steuervorrichtung (3000) zur Steuerung einer Tankentlüftungsanlage (1000), mit einem Rechner und einem Speicher, auf dem das Computerprogrammprodukt nach dem vorhergehenden Anspruch geladen ist.

## Claims

1. Method for checking the operability of a controllable shut-off valve (1400) in a tank venting system (1000) which has:
- a tank region (1200) which has a fuel tank (1210),
- a storage region (1100) which has a fuel vapour store (1110),
- an exhaust line (1300) which connects the fuel vapour store (1110) and the fuel tank (1210),
- the controllable shut-off valve (1400) which is arranged in the exhaust line (1300) and which in a closed state prevents pressure equalization between the tank region (1200) and the storage region (1100) and which in an open state allows pressure equalization between the tank region (1200) and the storage region (1100),
- a pressure changing device (1800) which is connected to the storage region in order to change the pressure in the storage region (1100),
- a pressure detecting device (1500) which has a storage pressure detecting device (1510) for detecting the pressure in the storage region (1100) and a tank pressure detecting device (1520) for detecting the pressure in the tank region (1200),
wherein the method has the following steps:
- detecting a closed setpoint state of the shut-off valve or controlling the shut-off valve (1400) to occupy the closed setpoint state,
- activating the pressure detecting device (1500),
- operating the pressure changing device (1800) to change the pressure in the storage region (1100),
and is **characterized by** the further steps of:
- ascertaining the pressure curve in the storage region (1100) by detecting output signals from the storage pressure detecting device (1510) over a first time period (T0) and evaluating the ascertained pressure curve to determine whether a first pressure change in the storage space caused by the operation of the pressure changing device (1800) meets a first plausibility criterion and, if the first plausibility criterion is met,
- ascertaining the pressure curves in the storage region (1100) and in the tank region (1200) by detecting output signals from the storage pressure detecting device (1510) and the tank pressure detecting device (1520) over a second time period (T1),
- evaluating a correlation between the pressure curves ascertained over the second time period (T1) in the storage region (1100) and in the tank region (1200) and
- identifying a closing fault of the shut-off valve (1400) on the basis of the correlation between the pressure curves ascertained over the second time period (T1) in the storage region (1100) and in the tank region (1200).

2. Method according to Claim 1, wherein a closing fault of the shut-off valve (1400) is identified if during the second time period (T1) the gradients of the pressure curves of the pressure in the tank region (1200) and of the pressure in the storage region (1100) have the same mathematical sign and
- the maximum pressure gradient of the pressure in the tank region (1200) in relation to the maximum pressure gradient of the pressure in the storage region (1100) within the second time period (T1) exceeds a predefined limit value, or
- the difference between the pressure gradients of the pressure in the tank region (1200) and of the pressure in the storage region (1100) within the second time period (T1) remains within a predefined tolerance range.

3. Method according to either of the preceding claims, wherein the tank region (1200) has a filling level sensor (1213), the method has an additional step in which a signal from the filling level sensor (1213) is detected and a duration of the second time period (T1) is predefined on the basis of the detected signal from the filling level sensor (1213).

4. Method according to one of the preceding claims, having an additional method step in which the pressure curve in the storage region (1100) is ascertained by detecting output signals from the storage pressure detecting device (1510) over a third time period (T2) and the ascertained pressure curve is evaluated to determine whether a third plausibility criterion is met,
wherein the third plausibility criterion is met when the pressure curve ascertained over the third time period (T2) in the storage region is either monotonically increasing or monotonically decreasing,
and wherein the relationship between the pressure curves ascertained over the second time period (T1) in the storage region (1100) and in the tank region (1200) is only evaluated if the third plausibility criterion is met.

5. Method according to Claim 4, wherein the beginning of the second time period (T1) is defined by the start of a time counter or the beginning of the second time period (T1) and of the third time period (T2) is defined by the start of the time counter.

6. Method according to one of the preceding claims, wherein during the first time period (T0) a fluid mass flow through the storage region (100) caused in particular by the operation of the pressure changing device (1800) is ascertained and in order to meet the first plausibility criterion it is additionally required that a time integral of the fluid mass flow over the first time period (T0) reaches or exceeds a predefined minimum value.

7. Method according to one of the preceding claims, wherein the method steps are carried out repeatedly several times.

8. Method according to one of the preceding claims, wherein in the event that no closing fault of the shut-off valve (1400) is identified, the following steps are carried out:
- controlling the shut-off valve (1400) to occupy the open state,
- evaluating the detected output signals from the pressure detecting device (1500) to determine whether a second pressure change in the storage space caused by controlling the shut-off valve (1400) to occupy the open state meets a second plausibility criterion,
- identifying an opening fault of the shut-off valve (1400) if the evaluation reveals that the second plausibility criterion is not met.

9. Method according to the preceding claim, wherein the evaluation reveals that the second plausibility criterion is met if
- after the shut-off valve has been controlled to occupy the open state, a pressure gradient change in the storage region (1100) and/or in the tank region (1200) at least reaches a predefined minimum value or a second pressure gradient in the storage region (1100) and/or in the tank region (1200) is within a predefined second pressure gradient value range,
- after the shut-off valve has been controlled to occupy the open state, the pressure in the storage region (1100) and/or in the tank region (1200) changes at least by a predefined second pressure amount or the pressure in the storage region (1100) and/or in the tank region (1200) is within a predefined second pressure value range, or
- after the shut-off valve has been controlled to occupy the open state, a second pressure curve in the storage region (1100) and/or in the tank region (1200) follows a predefined second reference curve or the second pressure curve remains within a predefined second tolerance range around the second reference curve.

10. Method according to one of the preceding claims, wherein the pressure changing device (1800) has:
- a ventilation line (1600) via which the fuel vapour store (1110) is connected to the atmosphere,
- a controllable ventilation valve (1610) which is arranged in the ventilation line (1600) in order to control the gas flow through the ventilation line (1600),
- a venting line (1700) via which the fuel vapour store (1110) is connected to a negative-pressure source (2100),
- a controllable venting valve (1710) which is arranged in the venting line (1700) in order to control the gas flow through the venting line (1700), wherein, in order to change the pressure in the storage region (1100), the ventilation valve (1610) is closed and the venting valve (1710) is opened in order to generate a negative pressure in the storage region (1100).

11. Method according to one of preceding Claims 1 to 9, wherein the pressure changing device (1800) has:
- a ventilation line (1600) via which the fuel vapour store (1110) is connected to the atmosphere,
- a controllable ventilation valve (1610) which is arranged in the ventilation line (1600) in order to control the gas flow through the ventilation line (1600),
- a venting line (1700) via which the fuel vapour store (1110) is connected to a negative-pressure source (2100),
- a controllable venting valve (1710) which is arranged in the venting line (1700) in order to control the gas flow through the venting line (1700), wherein, in order to change the pressure in the storage region (1100), the ventilation valve (1610) and the venting valve (1710) are opened in order to generate a negative pressure in the storage region (1100).

12. Method according to one of preceding Claims 1 to 9, wherein the pressure changing device (1800) has:
- a ventilation line (1600) via which the fuel vapour store (1110) is connected to the atmosphere,
- a controllable ventilation valve (1610) which is arranged in the ventilation line (1600) in order to control the gas flow through the ventilation line (1600),
- a controllable pump (1620) which is arranged downstream of the ventilation valve (1610) in the ventilation line (1600) in order to pump ambient air from the atmosphere into the fuel vapour store (1110) in order to produce a positive pressure in the storage region (1100),
- a venting line (1700) via which the fuel vapour store (1110) is connected to a negative-pressure source (2100),
- a controllable venting valve (1710) which is arranged in the venting line (1700) in order to control the gas flow through the venting line (1700), wherein, in order to change the pressure in the storage region (1100), the ventilation valve (1610) is opened, the venting valve (1710) is closed and the pump (1620) is operated in order to generate a positive pressure in the storage region (1100).

13. Method according to one of the preceding claims, wherein the storage pressure detecting device (1510) constitutes a virtual sensor and the output signals from the storage pressure detecting device (1510) are modelled based on a pressure calculated or measured downstream of the venting valve (1710).

14. Computer program product which can be loaded into the storage medium of a computer and which has software code sections according to which the method according to one of the preceding claims is executed when the computer program product runs on the computer.

15. Control apparatus (3000) for controlling a tank venting system (1000), having a computer and a storage medium on which the computer program product according to the preceding claim is loaded.

## Revendications

1. Procédé de vérification de l'aptitude au fonctionnement d'une vanne d'arrêt (1400) commandable dans une installation de purge d'air de réservoir (1000), laquelle possède :
- une zone de réservoir (1200), laquelle possède un réservoir à carburant (1210),
- une zone de stockage (1100), laquelle possède un accumulateur de vapeurs de carburant (1110),
- une conduite de dégazage (1300), laquelle relie l'accumulateur de vapeurs de carburant (1110) et le réservoir de carburant (1210),
- la vanne d'arrêt (1400) commandable, laquelle est disposée dans la conduite de dégazage (1300) et laquelle empêche une égalisation de pression entre la zone de réservoir (1200) et la zone de stockage (1100) dans un état fermé, et laquelle permet l'égalisation de pression entre la zone de réservoir (1200) et la zone de stockage (1100) dans un état ouvert,
- un dispositif de variation de pression (1800), lequel est relié à la zone de stockage afin de faire varier la pression dans la zone de stockage (1100),
- un dispositif de détection de pression (1500), qui possède un dispositif de détection de pression de stockage (1510) destiné à détecter la pression dans la zone de stockage (1100) et un dispositif de détection de pression de réservoir (1520) destiné à détecter la pression dans la zone de réservoir (1200),
le procédé comprenant les étapes suivantes :
- détection d'un état voulu fermé de la vanne d'arrêt ou commande de la vanne d'arrêt (1400) dans le sens de l'état voulu fermé,
- activation du dispositif de détection de pression (1500),
- mise en fonctionnement du dispositif de variation de pression (1800) dans le sens d'une variation de la pression dans la zone de stockage (1100),
et est **caractérisé par** les étapes supplémentaires suivantes :
- détermination de la courbe de pression dans la zone de stockage (1100) au moyen de la détection de signaux de sortie du dispositif de détection de pression de stockage (1510) sur une première période (T0) et évaluation de la courbe de pression déterminée afin de déterminer si une première variation de pression dans la zone de stockage provoquée par le fonctionnement du dispositif de variation de pression (1800) satisfait à un premier critère de plausibilité et, sous réserve que le premier critère de plausibilité soit satisfait,
- détermination des courbes de pression dans la zone de stockage (1100) et dans la zone de réservoir (1200) au moyen de l'acquisition des signaux de sortie du dispositif de détection de pression de stockage (1510) et du dispositif de détection de pression de réservoir (1520) sur une deuxième période (T1),
- évaluation d'une corrélation entre les courbes de pression dans la zone de stockage (1100) et dans la zone de réservoir (1200) déterminées sur la deuxième période (T1) et
- reconnaissance d'une erreur de fermeture de la vanne d'arrêt (1400) en fonction de la corrélation entre les courbes de pression dans la zone de stockage (1100) et dans la zone de réservoir (1200) déterminée sur la deuxième période (T1).

2. Procédé selon la revendication 1, une erreur de fermeture de la vanne d'arrêt (1400) étant reconnue dans le cas où, pendant la deuxième période (T1), les gradients des courbes de pression de la pression dans la zone de réservoir (1200) et de la pression dans la zone de stockage (1100) ont le même signe et
- le gradient de pression maximal de la pression dans la zone de réservoir (1200) par rapport au gradient de pression maximal de la pression dans la zone de stockage (1100) dépasse une valeur limite prédéfinie au cours de la deuxième période (T1), ou
- la différence entre les gradients de pression de la pression dans la zone de réservoir (1200) et la pression dans la zone de stockage (1100) reste dans une plage de tolérance prédéterminée au cours de la deuxième période (T1).

3. Procédé selon l'une des revendications précédentes, la région de réservoir (1200) possédant un détecteur de niveau (1213), le procédé comprenant une étape supplémentaire lors de laquelle un signal du détecteur de niveau (1213) est acquis et une durée de la deuxième période (T1) est prédéfinie en fonction du signal acquis du détecteur de niveau (1213).

4. Procédé selon l'une des revendications précédentes, comprenant une étape de supplémentaire, lors de laquelle la courbe de pression dans la zone de stockage (1100) est déterminée au moyen de l'acquisition de signaux de sortie du dispositif de détection de pression de stockage (1510) sur une troisième période (T2) et la courbe de pression déterminée est évaluée afin de déterminer si un troisième critère de plausibilité est satisfait,
le troisième critère de plausibilité étant satisfait lorsque la courbe de pression déterminée sur la troisième période (T2) dans la zone de stockage est soit croissante de manière monotone, soit décroissante de manière monotone,
et l'évaluation de la relation entre les courbes de pression acquises sur la deuxième période (T1) dans la zone de stockage (1100) et dans la zone de réservoir (1200) n'étant effectuée que si le troisième critère de plausibilité est satisfait.

5. Procédé selon la revendication 4, le début de la deuxième période (T1) étant défini par le démarrage d'un compteur de temps ou le début de la deuxième période (T1) et de la troisième période (T2) par le démarrage du compteur de temps.

6. Procédé selon l'une des revendications précédentes, un débit massique de fluide à travers la zone de stockage (100), en particulier provoqué par le fonctionnement du dispositif de variation de pression (1800), étant déterminé pendant la première période (T0) et la satisfaction du premier critère de plausibilité rendant en outre nécessaire qu'une intégrale dans le temps du débit massique de fluide pendant la première période (T0) atteint ou dépasse une valeur minimale prédéfinie.

7. Procédé selon l'une des revendications précédentes, les étapes étant répétées plusieurs fois.

8. Procédé selon l'une des revendications précédentes, les étapes suivantes étant exécutées dans le cas où aucune erreur de fermeture de la vanne d'arrêt (1400) n'est détectée :
- commande de la vanne d'arrêt (1400) dans le sens de l'état ouvert,
- évaluation des signaux de sortie acquis du dispositif de détection de pression (1500) en vue de vérifier si une deuxième variation de pression dans l'espace de stockage, provoquée par la commande de la vanne d'arrêt (1400) dans le sens de l'état ouvert, satisfait un deuxième critère de plausibilité
- reconnaissance d'une erreur d'ouverture de la vanne d'arrêt (1400) dans le cas où il résulte de l'évaluation que le deuxième critère de plausibilité n'est pas satisfait.

9. Procédé selon la revendication précédente, le résultat de l'évaluation étant que le deuxième critère de plausibilité est satisfait dans le cas où
- après la commande de la vanne d'arrêt dans le sens de l'état ouvert, une variation de gradient de pression dans la zone de stockage (1100) et/ou dans la zone de réservoir (1200) atteint au moins une valeur minimale prédéfinie ou un deuxième gradient de pression dans la zone de stockage (1100) et/ou dans la zone de réservoir (1200) se trouve à l'intérieur d'une deuxième plage de valeurs de gradient de pression prédéfinie,
- après la commande de la vanne d'arrêt dans le sens de l'état ouvert, la pression dans la zone de stockage (1100) et/ou dans la zone de réservoir (1200) varie d'au moins une deuxième valeur absolue de pression prédéfinie ou la pression dans la zone de stockage (1100) et/ou dans la zone de réservoir (1200) se trouve à l'intérieur une deuxième plage de valeurs de pression prédéfinie, ou
- après la commande de la vanne d'arrêt dans le sens de l'état ouvert, une deuxième courbe de pression dans la zone de stockage (1100) et/ou dans la zone de réservoir (1200) suit une deuxième courbe de référence prédéfinie ou la deuxième courbe de pression reste à l'intérieur d'une deuxième plage de tolérance prédéfinie autour de la deuxième courbe de référence.

10. Procédé selon l'une des revendications précédentes, le dispositif de variation de pression (1800) possédant :
- une conduite de ventilation (1600) par le biais de laquelle l'accumulateur de vapeurs de carburant (1110) est relié à l'atmosphère,
- une vanne de ventilation (1610) commandable, laquelle est disposée dans la conduite de ventilation (1600) pour commander le flux de gaz à travers la conduite de ventilation (1600),
- une conduite de purge d'air (1700), par le biais de laquelle l'accumulateur de vapeurs de carburant (1110) est relié à une source de dépression (2100),
- une vanne de purge d'air (1710) commandable, laquelle est disposée dans la conduite de purge d'air (1700) pour commander le flux de gaz à travers la conduite de purge d'air (1700), la variation de la pression dans la zone de stockage (1100) étant réalisée en fermant la vanne de ventilation (1610) et en ouvrant la vanne de purge d'air (1710) afin de produire une dépression dans la zone de stockage (1100).

11. Procédé selon l'une des revendications précédentes 1 à 9, le dispositif de variation de pression (1800) possédant :
- une conduite de ventilation (1600) par le biais de laquelle l'accumulateur de vapeurs de carburant (1110) est relié à l'atmosphère,
- une vanne de ventilation (1610) commandable, laquelle est disposée dans la conduite de ventilation (1600) pour commander le flux de gaz à travers la conduite de ventilation (1600),
- une conduite de purge d'air (1700) par le biais de laquelle l'accumulateur de vapeurs de carburant (1110) est relié à une source de dépression (2100),
- une vanne de purge d'air (1710) commandable, laquelle est disposée dans la conduite de purge d'air (1700) pour commander le flux de gaz à travers la conduite de purge d'air (1700), la variation de la pression dans la zone de stockage (1100) étant réalisée en ouvrant la vanne de ventilation (1610) et la vanne de purge d'air (1710) afin de générer une dépression dans la zone de stockage (1100).

12. Procédé selon l'une des revendications précédentes 1 à 9, le dispositif de variation de pression (1800) possédant :
- une conduite de ventilation (1600) par le biais de laquelle l'accumulateur de vapeurs de carburant (1110) est relié à l'atmosphère,
- une vanne de ventilation (1610) commandable, laquelle est disposée dans la conduite de ventilation (1600) pour commander le flux de gaz à travers la conduite de ventilation (1600),
- une pompe (1620) commandable, laquelle est disposée dans la conduite de ventilation (1600) en aval de la vanne de ventilation (1610) pour pomper de l'air ambiant de l'atmosphère dans l'accumulateur de vapeurs de carburant (1110) afin de générer une surpression dans la zone de stockage (1100),
- une conduite de purge d'air (1700) par le biais de laquelle l'accumulateur de vapeurs de carburant (1110) est relié à une source de dépression (2100),
- une vanne de purge d'air (1710) commandable, laquelle est disposée dans la conduite de purge d'air (1700) pour commander le flux de gaz à travers la conduite de purge d'air (1700), la variation de la pression dans la zone de stockage (1100) étant réalisée en ouvrant la vanne de ventilation (1610), en fermant la vanne de purge d'air (1710) et en faisant fonctionner la pompe (1620) afin de générer une surpression dans la zone de stockage (1100).

13. Procédé selon l'une des revendications précédentes, le dispositif de détection de pression de stockage (1510) représentant un capteur virtuel et les signaux de sortie du dispositif de détection de pression de stockage (1510) étant modélisés sur la base d'une pression mesurée ou calculée en aval de la vanne de purge d'air (1710).

14. Produit de programme informatique, lequel peut être chargé dans la mémoire d'un ordinateur et lequel possède des portions de code logiciel selon lequel le procédé selon l'une des revendications précédentes est mis en œuvre lorsque le produit de programme informatique est exécuté sur l'ordinateur.

15. Dispositif de commande (3000) destiné à commander une installation de purge d'air de réservoir (1000), comprenant un ordinateur et une mémoire sur laquelle est chargé le produit de programme informatique selon la revendication précédente.
